# EUROPÄISCHE PATENTSCHRIFT

(11) **EP 1 134 533 B1**
(45) Veröffentlichungstag und Bekanntmachung des Hinweises auf die Patenterteilung: **24.12.2008**
(21) Anmeldenummer: 01104207.4
(22) Anmeldetag: 22.02.2001
(51) Int. Cl.: F28D 9/00, F28F 27/00

(54) **Wärmeübertrager in Schichtbauweise und Verwendung desselben**
Stacked heat exchanger and use of same
Echangeur de chaleur à empilage et son utilisation

(30) Priorität: 17.03.2000 DE 10013439
(43) Veröffentlichungstag der Anmeldung: 19.09.2001
(73) Patentinhaber: NuCellSys GmbH, 73230 Kirchheim/Teck-Nabern (DE)
(72) Erfinder: Boneberg, Stefan, 72660 Beuren (DE); Motzet, Bruno, 73235 Weilheim/Teck (DE); Tischler, Alois, 94501 Aidenbach (DE); Weisser, Marc, 73277 Owen/T. (DE)
(74) Vertreter: Kocher, Klaus-Peter

(56) Entgegenhaltungen:
- US-A- 4 177 861
- US-A- 4 971 137
- US-A- 5 823 252

## Beschreibung

Die Erfindung bezieht sich auf einen Wärmeübertrager in Schichtbauweise nach dem Oberbegriff des Anspruchs 1 und auf eine vorteilhafte Verwendung desselben. Ein solcher Wärmeübertrager ist beispielsweise als Verdampfer in einer Reformierungsanlage einsetzbar, in der ein Kohlenwasserstoff oder Kohlenwasserstoffderivat durch Wasserdampfreformierung zwecks Erzeugung eines wasserstoffreichen Gases reformiert wird. Das wasserstoffreiche Gas kann dann z.B. zur Speisung von Brennstoffzellen in einem Brennstoffzellenfahrzeug dienen.

Wärmeübertrager dieses Typs in Schicht- bzw. Plattenbauweise sind in unterschiedlichen Ausführungen bekannt. Typischerweise hat dieser Wärmeübertragertyp einen Aufbau aus übereinandergestapelten Platten, Scheiben oder Folien, wodurch im wesentlichen ebene Schichten gebildet werden, oder einen Aufbau aus ineinanderliegenden Rohren, wodurch zylinderringförmige Schichten gebildet werden.

Für bestimmte Anwendungen werden mehrstufige Wärmeübertrager benötigt, bei denen zwei oder mehr Stufen strömungstechnisch bezüglich des einen und/oder des anderen Mediums seriell oder parallel angeordnet sind, speziell auch für einen Verdampfer in einer Reformierungsanlage. So ist in der Patentschrift DE 44 26 692 C1 ein zweistufiger Verdampfer zur Verdampfung eines Reaktand-Massenstroms mit Hilfe eines Wärmeträgermediums beschrieben, bei dem die beiden Verdampferstufen strömungstechnisch bezüglich des Reaktand-Massenstroms und bezüglich des Wärmeträgermediums hintereinandergeschaltet sind. Dabei kann jede Stufe ihrerseits aus zwei Verdampferteilen bestehen, die strömungstechnisch bezüglich des Reaktand-Massenstroms und/oder des Wärmeträgermediums parallel geschaltet sind. Speziell wird dies dafür genutzt, Wasser und Methanol in parallelen Verdampferteilen zu verdampfen und die beiden Komponenten anschließend zur Bildung des Reaktand-Massenstroms zusammenzuführen. Der Verdampfer besitzt einen Aufbau aus aufeinandergestapelten Folien mit abwechselnd Kanälen für das Wärmeträgermedium und Kanälen für den Reaktand-Massenstrom. Die zwei Verdampfer können in diesen Aufbau dadurch integriert sein, dass in einer Gruppe der beiden alternierenden Folienschichten die erste Stufe von einem ersten Kanal gebildet ist, der sich direkt an eine Zuströmleitung anschließt, und die zweite Stufe von Kanälen gebildet ist, die von dem ersten Kanal abgehen, der auf diese Weise einen Verteilerkanal darstellt.

In der Offenlegungsschrift EP 0 861 802 A2 ist eine Reformereinheit mit integriertem Verdampfer in Schichtbauweise offenbart, bei welcher der Verdampfer eine eigentliche Verdampfungsschicht und eine dieser strömungstechnisch bezüglich des zu verdampfenden Mediums nachgeschaltete Dampfüberhitzungsschicht umfasst. Den beiden Verdampferschichten ist Wärme von benachbarten Heizschichten zuführbar, die durch einen katalytischen Verbrennungsvorgang erzeugt wird.

Für Brennstoffzellenfahrzeugen wird das von anderen Kraftfahrzeugen gewohnte, schnelle Kaltstartverhalten gewünscht, was bei Verwendung einer Dampfreformierungsanlage zur Wasserstofferzeugung ein entsprechend rasches Kaltstartverhalten des Verdampfers bedingt. Werden zu diesem Zweck ein kleiner, leichter Startverdampfer und ein Hauptverdampfer strömungstechnisch bezüglich des zu verdampfenden Mediums in Reihe geschaltet, so hat dies einen zusätzlichen Druckverlust durch den Startverdampfer zur Folge und erschwert die Temperaturregelung im Normalbetrieb. Eine alternative Lösung, bei welcher der zu reformierende Einsatzstoffdampf in einem einteiligen Verdampfer erzeugt und je nach Betriebsfall, d.h. Kaltstart oder Normalbetrieb, durch ein Dampfventil mit gesteuerten Anteilen in eine erste und/oder zweite Reformerstufe geleitet werden kann, besitzt das Problem, dass während des Kaltstarts Dampf am zunächst kalten Ventil kondensiert und wegen der extremen Umgebungsbedingungen aufgrund des heißen Einsatzstoffdampfes ein vergleichsweise aufwendiges Ventil erforderlich ist.

Der Erfindung liegt daher als technisches Problem die Bereitstellung eines Wärmeübertragers der eingangs genannten Art und einer vorteilhaften Verwendung desselben zugrunde, der eine unterschiedliche Temperierung des einen Mediums steuerbar durch einen ersten oder einen zweiten Wärmeübertragerteil oder mit steuerbaren Anteilen parallel in beiden betreffenden Wärmeübertragerteilen erlaubt.

Die Erfindung löst dieses Problem durch die Bereitstellung eines Wärmeübertragers mit den Merkmalen des Anspruchs 1 sowie einer Verwendung desselben gemäß Anspruch 4.

Beim erfindungsgemäßen Wärmeübertrager, der einen Aufbau aus alternierenden Schichten für die Hindurchleitung eines ersten bzw. eines zweiten Mediums besitzt, ist die jeweilige zweite Schicht in zwei strömungstechnisch parallele Schichtlagen aufgeteilt. Den jeweiligen beiden Schichtlagen der zweiten Schichten sind Mittel zum Zuführen des entsprechenden zweiten Mediums zur jeweils einen Schichtlage und/oder zur jeweils anderen Schichtlage in steuerbaren Anteilen zugeordnet. Durch die beiden Schichtlagen kann das betreffende Medium in gewünschter Weise unterschiedlich temperiert und/oder auch beliebig aufgeteilt werden.

Bei Verwendung dieses Wärmeübertragers gemäß Anspruch 4 in einer Reformierungsanlage als Verdampfer kann der zu reformierende Einsatzstoff dementsprechend in steuerbaren Anteilen im einen oder anderen Verdampferteil verdampft werden, um beispielsweise zwei verschiedene Reformerstufen unabhängig mit dem dampfförmigen Edukt zu versorgen und/oder einen der beiden in den Schichtaufbau integrierten Verdampferteile speziell auf den Kaltstartfall auszulegen, d.h. auf geringe Trägheit und damit schnelle Kaltstartverdampfung, den anderen Verdampferteil hingegen auf den Normalbetrieb im warmgelaufenen Zustand.

Der erfindungsgemäße Schichtaufbau hat den weiteren Vorteil, dass die beiden Schichtlagen jeder zweiten Schicht parallel und nicht seriell mit dem ersten Medium in Wärmekontakt gebracht werden können. Bei Verwendung des Wärmeübertragers als Verdampfer in einer Reformierungsanlage derart, dass die einen Schichtlagen der zweiten Schichten als Hauptverdampfer im normalen, warmgelaufenen Betrieb und die anderen Schichtlagen als Startverdampfer speziell für den Kaltstartfall fungieren, kann der Hauptverdampfer direkt vom ersten Medium beheizt werden, ohne dass dieses zuerst über den Startverdampfer geleitet wird.

Bei einem nach Anspruch 2 weitergebildeten Wärmeübertrager sind für die jeweiligen beiden Schichtlagen unterschiedliche Wärmeübertragungsleistungen vorgesehen, z.B. durch unterschiedlich große effektive Wärmeübertragungsoberflächen. Bei Verwendung des Wärmeübertragers als Verdampfer können so die einen Schichtlagen speziell auf den Kaltstartfall und die anderen Schichtlagen speziell für den warmgelaufenen Betrieb ausgelegt sein.

Bei einem nach Anspruch 3 weitergebildeten Wärmeübertrager beinhalten die Zufuhrmittel für das zweite Medium ein Steuerventil, mit dem das zweite Medium in steuerbaren Anteilen in die beiden strömungstechnisch parallelen Schichtlagengruppen aufteilbar ist. Im Einsatzfall eines Verdampfers hat dies den besonderen Vorteil, dass das Steuerventil auf der Flüssigseite und nicht auf der Dampfseite des zu verdampfenden zweiten Mediums angeordnet ist und daher nicht auf die hohen Dampftemperaturen ausgelegt sein muss. Zudem entfällt das einen schnellen Kaltstart behindernde Problem einer Kondensation von verdampftem Medium an einem noch kalten, dampfseitigen Ventil.

Eine vorteilhafte Ausführungsform der Erfindung ist in den Zeichnungen dargestellt und wird nachfolgend beschrieben. Hierbei zeigen:
- Fig. 1: eine schematische Querschnitts-Explosionsansicht des Schichtstapelaufbaus eines z.B. als Verdampfer verwendbaren Wärmeübertragers und
- Fig. 2 bis 4: Draufsichten auf die verschiedenen, im Wärmeübertrager-Schichtaufbau von Fig. 1 zur Bildung mehrerer Schichtlagen der von einem der beiden in Wärmekontakt zu bringenden Medien durchströmbaren Schichten.

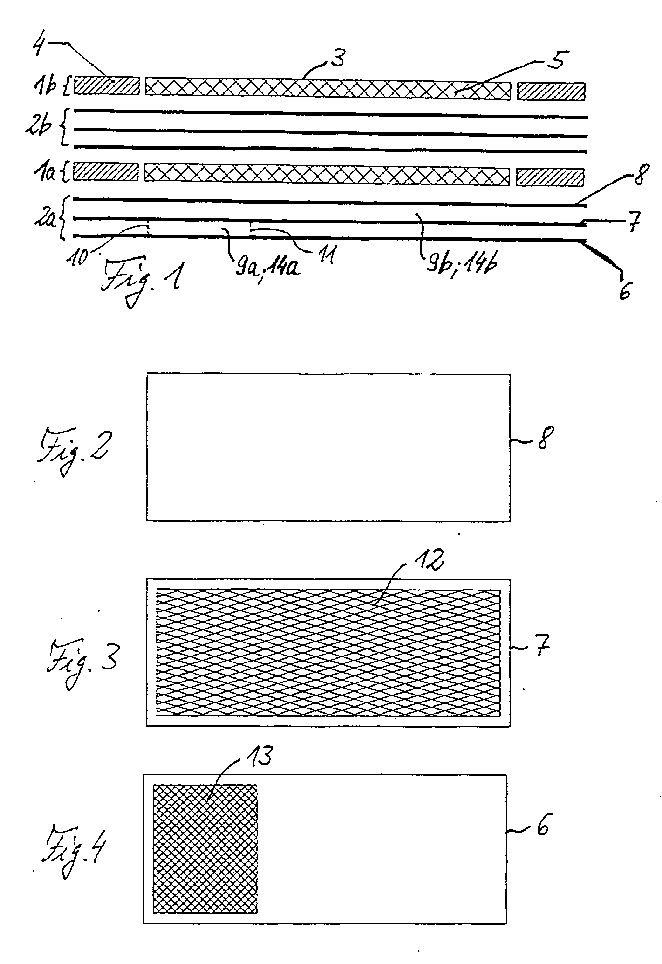

Fig. 1 zeigt je zwei Schichten la, 1b, 2a, 2b eines Schichtstapelaufbaus aus einer beliebigen, vorgebbaren Anzahl von alternierend aufeinanderfolgenden ersten Schichten la, 1b, ... und zweiten Schichten 2a, 2b,... eines Wärmeübertragers in Schichtbauweise, der deutlicheren Darstellung wegen in einer schematischen Querschnitts-Explosionsansicht. Die ersten Schichten la, 1b beinhalten jeweils eine Lamelle 3 als wärmeübertragungsaktives Bauteil, auch Wärmeleitrippe genant, und einen diese umgebenden Rahmen 4 und definieren von einem ersten Medium durchströmbare, erste Wärmeübertragerkanäle 5. Die Lamelle 3 kann z.B. aus einer wärmeleitenden Wellrippenstruktur bestehen, die einlagig oder mehrlagig z.B. aus kreuzweise übereinandergestapelten Wellrippenlagen, sogen. Kreuzkanalstrukturen, gebildet sein kann.

Zwischen je zwei ersten Schichten 1a, 1b befindet sich als jeweilige zweite, von einem zweiten Medium durchströmbare Schicht 2a, 2b eine Folge von drei aufeinandergestapelten, metallischen Platten- oder Folienelementen 6, 7, 8, die in den Fig. 2 bis 4 jeweils einzeln in Draufsicht schematisch gezeigt sind. Daraus ist ersichtlich, dass in diesem Beispiel die in Fig. 1 obere Folie 8 der zweiten Schichten 2a, 2b gemäß Fig. 2 keine Strukturierung auf der gezeigten Seite aufweist, die mittlere Folie 7 hingegen gemäß Fig. 3 auf der betreffenden Seite mit einer ganzflächigen Strukturierung 12 versehen ist, während die untere Folie 6 auf der gezeigten Seite gemäß Fig. 4 nur auf einem Teil 13 ihrer Fläche, z.B. auf einem Drittel derselben, strukturiert ist. Folie 6 kann in einer bevorzugten Weiterbildung auch ganzflächig strukturiert sein oder in einer weiteren bevorzugten Weiterbildung sogar identisch mit Folie 4 sein. Auf ihrer in den Fig. 2 bis 4 nicht gezeigten, anderen Seite sind alle drei Folien 6, 7, 8 dieses Ausführungsbeispiels unstrukturiert. Soweit eine Strukturierung der Folien 6, 7, 8 vorhanden ist, werden dadurch zweite Wärmeübertragerkanäle definiert, die vom zweiten Medium durchströmbar sind und mit den ersten Wärme-übertragerkanälen 5 der ersten Schichten la, 1b in Wärmekontakt stehen. Soweit sich unstrukturierte Flächen im Schichtaufbau von Fig. 1 gegenüberliegen, grenzen diese im fertig montierten Schichtaufbau gasdicht aneinander an.

Daraus folgt, dass durch den Stapelverbund der jeweiligen drei Metallfolien 6, 7, 8 zwei Schichtlagen 9a, 9b gebildet werden, die je einen zweiten Wärmeübertragerkanal 14a, 14b zur Durchströmung mit dem zweiten Medium definieren und zusammen die jeweilige zweite Schicht 2a, 2b bilden. Dabei ist der eine zweite Wärmeübertragerkanal 14a jeder zweiten Schicht 2a, 2b über die mittlere Folie 7 vom anderen zweiten Wärmeübertragerkanal 14b strömungstechnisch getrennt. Es können auch mehr als zwei Schichtlagen 9a, 9b vorgesehen sein. Entsprechend der Teilstrukturierung der Metallfolie 6 von Fig. 4 erstreckt sich der eine zweite Wärmeübertragerkanal 14a nur über den entsprechenden Teilbereich der zugehörigen Schichtlage 9a, wie in Fig. 1 schematisch durch gestrichelte Linien 10, 11 symbolisiert. Der andere zweite Wärmeübertragungskanal 14b erstreckt sich hingegen entsprechend der ganzflächigen Strukturierung der Folie 7 von Fig. 3 über die gesamte Fläche, über die sich auch die Lamellen 5 erstrecken. Das zweite Medium stellt z.B. das Heizmedium auf der Sekundärseite der Wärmeübertragers dar, das erste Medium wird auf der kalten Primärseite vom Heizmedium erhitzt.

Durch entsprechende Anschlussstrukturen, die herkömmlicher Art sind und daher hier nicht näher erläutert werden, wird dafür gesorgt, dass das erste Medium parallel in die Wärmeübertragerkanäle 5 der ersten Schichten la, 1b eingespeist und aus diesen wieder abgeführt wird und das zweite Medium parallel und mit steuerbaren Anteilen in den einen, den anderen oder beide Wärmeübertragerkanäle 14a, 14b der beiden Schichtlagen 9a, 9b der zu den ersten Schichten 1a, 1b alternierend angeordneten zweiten Schichten 2a, 2b eingespeist und nach Durchströmung derselben aus diesen wieder abgeführt werden kann.

Der gezeigte Wärmeübertrager eignet sich beispielsweise zur Verwendung als Verdampfer in einer Reformierungsanlage mit zweistufiger Reformierung. In diesem Fall dienen die ersten Schichten 1a, 1b als Heizschichten, indem ein entsprechend heißes Medium durch sie hindurchgeleitet wird oder diese Schichten als aktiv wärmeerzeugende Schichten ausgelegt sind, z.B. als katalytische Brennerschichten. Die aus den jeweils zwei parallelen Schichtlagen 9a, 9b bestehenden zweiten Schichten 2a, 2b dienen als Verdampferschichten, denen der zu reformierende Einsatzstoff, z.B. ein Gemisch aus Wasser und einem Kohlenwasserstoff oder Kohlenwasserstoffderivat oder auch Wasser oder andere flüssige Edukte zwecks Verdampfung zugeführt wird. Vorteilhafterweise bilden dabei die einen Schichtlagen 9a, welche die von der nur teilstrukturierten Folie 6 definierten Wärmeübertragerkanäle 14a beinhalten, zusammen einen Startverdampfer, während die anderen Schichtlagen 9b mit der Strukturierung zusammen einen Hauptverdampfer bilden, der sowohl bezüglich der Heizseite als auch bezüglich der Verdampfungsseite strömungstechnisch parallel zum Startverdampfer geschaltet und mit diesem in den gemeinsamen Schichtaufbau integriert ist.

Dies realisiert folglich einen 3-gängigen Verdampfer mit getrennten Ein- und Auslässen für den zu verdampfenden Einsatzstoff zur unabhängigen Versorgung zweier nachgeschalteter Reformerstufen mit dem dampfförmigen Edukt. Zur steuerbaren Zuführung des Einsatzstoffes entweder ganz zum Startverdampferteil, ganz zum Hauptverdampferteil oder mit einstellbaren Anteilen teilweise zum Startverdampferteil und teilweise zum Hauptverdampferteil ist in einer Einsatzstoff-Zufuhrleitung in nicht gezeigter Weise ein ansteuerbares Ventil mit zwei Auslässen vorgesehen. Von diesen beiden Auslässen erstreckt sich je ein Leitungszweig zur Eintrittsseite des Startverdampferteils bzw. des Hauptverdampferteils. Da sich dieses Ventil im Gegensatz zu einem dampfseitigen Ventil in einem Bereich mit deutlich niedrigeren Temperaturen befindet, genügt hierfür ein vergleichsweise leichtes, kostengünstiges Flüssigkeitsventil.

Der Wegfall eines dampfseitigen Ventils hat den weiteren Vorteil, dass sich zwischen dem Verdampfer und dem anschließenden Reformer speziell im Kaltstartfall nur wenig thermische, durch den Dampf aufzuheizende Masse befindet, nämlich nur diejenige der zugehörigen Verbindungsleitung. Dadurch kondensiert während der ersten Kaltstartphase deutlich weniger Dampf als bei Verwendung eines dampfseitigen Ventils.

Bei einem Kaltstart wird dann Einsatzstoff zuerst nur in den Startverdampferteil 9a eingespeist. Da sich dieser nur über einen Teil der Stapelquerschnittsfläche erstreckt, lässt er sich relativ schnell aufheizen und ist so schon nach kurzer Zeit in der Lage, Dampf zu liefern. Für den schnellen Kaltstart ist zudem eine Führung des Heizmediums im Gegenstrom zum zu verdampfenden Einsatzstoff förderlich. Es sei angemerkt, dass die jeweilige Schichtlage 9a des Startverdampferteils nicht nur auf der einen Seite direkt über die teilstrukturierte Folie 6 mit der einen benachbarten (Lamellen-)Heizschicht, sondern über den wärmeleitenden Kontakt der mittleren Folie 7 und der unstrukturierten Folie 8 auch mit der anderen der beiden benachbarten Heizschichten 1a, 1b in Wärmekontakt steht.

Bei Erreichen der ausreichenden Betriebstemperatur wird dann der Hauptverdampferteil aktiviert, indem ihm der gesamte zu verdampfende Einsatzstoff oder jedenfalls ein Großteil desselben zugeführt wird. Der Startverdampferteil 9a wird dann deaktiviert oder nur noch mit geringer Belastung weiterbetrieben. Der mit dem Hauptverdampferteil in einen gemeinsamen Schichtaufbau integrierte Startverdampferteil fungiert vorteilhafterweise im dynamischen Anlagenbetrieb durch seine zusätzliche Masse direkt als thermischer Puffer des Hauptverdampferteils.

Durch die Parallelschaltung von Startverdampferteil und Hauptverdampferteil können der heizseitige Druckverlust und das Bauvolumen im Vergleich zu zwei seriell hintereinandergeschalteten Verdampferteilen verringert werden. Außerdem lässt sich die Lebensdauer des Verdampfers aufgrund geringerer thermischer Spannungen im Betrieb verbessern, da diese Spannungen beim Kaltstart nur im Startverdampferteil und damit in einem im Normalbetrieb wenig belasteten Bereich auftreten, während die im Normalbetrieb stark beanspruchten Hauptverdampferbereiche geeignet stark ausgelegt werden können, ohne dadurch das Kaltstartverhalten zu verlangsamen.

Die direkte, parallele Beheizbarkeit von Hauptverdampferteil und Startverdampferteil z.B. durch katalytische Brennerschichten verbessert gegenüber einer seriellen heizseitigen Anordnung von Startverdampferteil und Hauptverdampferteil die Regelbarkeit des Verdampfers bei einer Regelung über die Heizmedium-Eintrittstemperatur.

Es versteht sich, dass der gezeigte Wärmeübertrager auch für anderweitige Einsatzzwecke geeignet ist, in denen ein Medium durch ein anderes temperiert und dabei steuerbar durch den einen, durch den anderen oder anteilig durch beide von zwei strömungstechnisch parallelen Wärmeübertragerteilen hindurchgeleitet werden soll. Des weiteren versteht sich, dass die Erfindung neben dem gezeigten Schichtaufbau auch andersartig in Schichtbauweise realisierte Wärmeübertrager umfasst, z.B. mit andersartiger Strukturierung der verwendeten Platten-, Scheiben- oder Folienelemente zur Festlegung der entsprechenden Wärme-übertragerschichten oder mit einem zylinderrohrförmigen Schichtaufbau aus ineinanderliegenden, wärmeleitenden Rohrelementen. Die Wärmeübertragerkanäle können statt durch Strukturierung einzelner Platten- oder Folienelemente auch durch beabstandete, unstrukturierte Plattenelemente mit einer zwischengefügten Abstandshalterstruktur, insbesondere einer wärmeleitenden Wellrippenstruktur, gebildet sein. Wesentlich ist jeweils nur, dass die eine oder mehreren, jeweils zwischen zwei benachbarten ersten Schichten für ein erstes Medium liegenden zweiten Schichten für ein zweites Medium in wenigstens zwei strömungstechnisch parallele Schichtlagen aufgeteilt sind, auf die das zweite Medium steuerbar aufgeteilt werden kann.

Eine weitere günstige Weiterbildung besteht darin, zwei unterschiedliche Medien zu verdampfen, die von einem dritten Medium beheizt werden.

## Patentansprüche

1. Wärmeübertrager in Schichtbauweise mit
- mehreren, strömungstechnisch parallelen ersten Schichten (1a, 1b), die von einem ersten Medium durchströmbare erste Wärmeübertragerkanäle (5) definieren, und
- je einer zweiten Schicht (2a, 2b) zwischen zwei ersten Schichten, wobei die jeweilige zweite Schicht mit den beiden benachbarten ersten Schichten in Wärmekontakt steht und wenigstens einen von einem zweiten Medium durchströmbaren zweiten Wärmeübertragerkanal (14a, 14b) definiert,
**dadurch gekennzeichnet, dass**
- die jeweilige zweite Schicht (2a, 2b) zwei strömungstechnisch parallele Schichtlagen (9a, 9b) umfasst, von denen jede einen zugehörigen zweiten Wärmeübertragerkanal (14a, 14b) definiert, und
- Mittel zum steuerbaren Zuführen des zweiten Mediums zur jeweils einen Schichtlage (9a) und/oder zur jeweils anderen Schichtlage (9b) vorgesehen sind.

2. Wärmeübertrager nach Anspruch 1, weiter
**dadurch gekennzeichnet, dass**
die beiden Schichtlagen (9a, 9b) auf unterschiedliche Wärmeübertragungsleistungen ausgelegt sind.

3. Wärmeübertrager nach Anspruch 1 oder 2,
**dadurch gekennzeichnet, dass**
die Zufuhrmittel für das zweite Medium ein Steuerventil beinhalten, welches den ankommenden Medienstrom in steuerbaren Anteilen zur Eintrittsseite der jeweiligen einen Schichtlage (9a) und/oder zur Eintrittsseite der jeweiligen anderen Schichtlage (9b) weiterleitet.

4. Verwendung eines Wärmeübertragers nach einem der Ansprüche 1 bis 3 in einer Reformierungsanlage als Verdampfer zur Verdampfung eines zu reformierenden Einsatzstoffes, wobei die einen Schichtlagen (9a) einen Startverdampferteil und die anderen Schichtlagen (9b) einen Hauptverdampferteil bilden.

## Claims

1. Heat exchanger of the layered type, with
- a plurality of fluidically parallel first layers (1a, 1b) which define first heat exchanger ducts (5) through which a first medium is capable of flowing, and
- in each case a second layer (2a, 2b) between two first layers, the respective second layer being in thermal contact with the two adjacent first layers and defining at least one second heat exchanger duct (14a, 14b) through which a second medium is capable of flowing,
**characterized in that**
- the respective second layer (2a, 2b) comprises two fluidically parallel layer plies (9a, 9b), each of which defines an associated second heat exchanger duct (14a, 14b), and
- means for the controllable supply of the second medium to the one layer ply (9a) in each case and/or to the other layer ply (9b) in each case.

2. Heat exchanger according to Claim 1, further **characterized in that** the two layer plies (9a, 9b) are designed for different heat transmission capacities.

3. Heat exchanger according to Claim 1 or 2, **characterized in that** the supply means for the second medium contain a control valve which transfers the oncoming media flow in controllable fractions to the inlet side of the one layer ply (9a) in each case and/or to the inlet side of the other layer ply (9b) in each case.

4. Use of a heat exchanger according to one of Claims 1 to 3 as an evaporator in a reforming plant for the evaporation of a batch to be reformed, the one layer plies (9a) forming a starting evaporator part and the other layer plies (9b) a main evaporator part.

## Revendications

1. Echangeur de chaleur à construction empilée comprenant :
- plusieurs premières couches (1a, 1b) parallèles du point de vue de la technique d'écoulement, qui définissent des premiers canaux de transfert thermique (5) pouvant être traversés par un premier fluide, et
- dans chaque cas une deuxième couche (2a, 2b) entre deux premières couches, la deuxième couche respective étant en contact thermique avec les deux premières couches adjacentes, et définissant au moins un deuxième canal de transfert thermique (14a, 14b) pouvant être traversé par un deuxième fluide,
**caractérisé en ce que**
- la deuxième couche respective (2a, 2b) comprend deux couches (9a, 9b) parallèles du point de vue de la technique d'écoulement, dont chacune définit un deuxième canal de transfert thermique associé (14a, 14b), et
- des moyens sont prévus pour l'alimentation commandable du deuxième fluide à chaque fois à une couche respective (9a) et/ou à l'autre couche respective (9b).

2. Echangeur de chaleur selon la revendication 1, **caractérisé en outre en ce que** les deux couches (9a, 9b) sont conçues avec des puissances de transfert thermique différentes.

3. Echangeur de chaleur selon la revendication 1 ou 2, **caractérisé en ce que**
les moyens d'alimentation pour le deuxième fluide contiennent une soupape de commande qui transmet le courant de fluide affluant dans des proportions commandables au côté d'entrée d'une couche respective (9a) et/ou au côté d'entrée de l'autre couche respective (9b).

4. Utilisation d'un échangeur de chaleur selon l'une quelconque des revendications 1 à 3, dans une installation de reformation, en tant qu'évaporateur pour l'évaporation d'une substance de charge à reformer, les couches (9a) formant une partie d'évaporateur initiale et les autres couches (9b) formant une partie d'évaporateur principale.
